Europäisches Patentamt

European Patent Office

Office européen des brevets

(11) Veröffentlichungsnummer: **0 319 014**
**A1**

# (12) EUROPÄISCHE PATENTANMELDUNG

(21) Anmeldenummer: **88120135.4**

(22) Anmeldetag: **02.12.88**

(51) Int. Cl.⁴: **B65G 47/68 , B65G 47/14**

(30) Priorität: **04.12.87 IT 371887**

(43) Veröffentlichungstag der Anmeldung:
**07.06.89 Patentblatt 89/23**

(84) Benannte Vertragsstaaten:
**AT BE CH DE ES FR GB GR IT LI LU NL SE**

(71) Anmelder: **SIMONAZZI A. & L. S.p.A.**
**Via la Spezia 241/A**
**I-43016 Parma(IT)**

(72) Erfinder: **Limoni, Alfredo**
**Via Martiri della Liberazione 111**
**I-43016 Parma(IT)**

(74) Vertreter: **Beszédes, Stephan G., Dr.**
**Patentanwalt**
**Münchener Strasse 80a Postfach 1168**
**D-8060 Dachau(DE)**

(54) **Vorrichtung zum Überführen eines mehrreihigen Stromes aufrechtstehender Gegenstände, insbesondere Flaschen, in eine einzige Reihe.**

(57) Vorrichtung zum Überführen eines mehrreihigen Stromes aufrechtstehender Gegenstände, insbesondere Flaschen, in eine einzige Reihe
mit einem geradlinigen, mit Leitflächen (10,11) versehenen Zuförderer (2),
einem aus einer rotierenden Fläche bestehenden Zwischenförderer (4),
einem Abförderer (8)
und einer in Drehrichtung der Fläche spiralförmig nach außen verlaufenden, die Gegenstände abdrängenden, gestellfesten Leitfläche (14),
bei welcher
die rotierende Fläche (5) des Zwischenförderers (4) eine ebene Scheibe ist.

Fig.1

# Vorrichtung zum Überführen eines mehrreihigen Stromes aufrechtstehender Gegenstände, insbesondere Flaschen, in eine einzige Reihe

Die Erfindung betrifft eine Vorrichtung zum Überführen eines mehrreihigen Stromes aufrechtstehender Gegenstände, insbesondere Flaschen, in eine einzige Reihe mit einem geradlinigen, mit Leitflächen versehenen Zuförderer, einem aus einer rotierenden Fläche bestehenden Zwischenförderer, einem Abförderer und einer in Drehrichtung der Fläche spiralförmig nach außen verlaufenden, die Gegenstände abdrängenden, gestellfesten Leitfläche.

Eine derartige Vorrichtung ist aus der DE-PS 35 00 660 bekannt. Bei der vorbekannten Vorrichtung wird ein mehrreihiger Strom aufrechtstehender Flaschen auf einem geradlinigen, mit Leitflächen versehenen Zuförderer bewegt. An dem geradlinigen Bereich des Zuförderers schließt sich ein kreisbogenförmiger Bereich an, der über einen Winkelbereich von 90° verläuft. Im Mittelpunkt des kreisbogenförmigen Abschnitts des Zuförderers befindet sich der Mittelpunkt einer rotierenden Fläche, deren äußere, kreisförmige Begrenzung das Ende des geradlinigen Bereichs des Zuförderers tangential berührt und die an den inneren Teil des kreisbogenförmigen Bereichs des Zuförderers angrenzt. Über den kreisförmigen Bereich des Zuförderers erstreckt sich eine gestellfeste, spiralförmig nach innen verlaufende, äußere Leitfläche. Eine weitere, innere, gestellfeste Leitfläche beginnt am Ende des geradlinigen Bereichs des Zuförderers, verläuft von dort etwa halbkreisförmig zum Mittelpunkt des Zuförderers und setzt sich dann als etwa spiralförmig nach außen verlaufende Leitfläche fort. An der dem kreisförmigen Bereich des Zuförderers gegenüberliegenden Seite des Zwischenförderers ist ein den Zwischenförderer teilweise umschließender Abförderer angeordnet, der den vom Zwischenförderer erzeugten, einreihigen Flaschenstrom abfördert.

Aus der US-PS 14 30 132 ist eine Vorrichtung zum Überführen eines mehrreihigen Stromes aufrechtstehender Gegenstände in eine einzige Reihe bekannt, bei der diese Gegenstände auf einen kreisförmigen Zwischenförderer mit einer kegeligen Oberfläche gebracht werden. Auf der gegenüber dem Zuführbereich liegenden Seite des Zwischenförderers ist eine kurze Leitfläche angeordnet, und zwar in einem derartigen Abstand von der äußeren Begrenzungsfläche des Zuförderers, daß zwischen den beiden Leitflächen genau eine Reihe von Gegenständen Platz hat. Die aus der US-PS 14 30 132 vorbekannte Vorrichtung hat folgende Nachteile: Zum einen müssen die zu vereinzelnden Gegenstände teilweise mehrmals den Zwischenförderer umlaufen, bevor sie in einem einreihigen Strom abgefördert werden; die Vorrichtung arbeitet also nicht effektiv. Zum anderen berühren sich die Gegenstände auf dem Abförderer; zwischen den in einer einzigen Reihe angeordneten Gegenständen sind also keine für die spätere Weiterverarbeitung unter Umständen erforderliche Zwischenräume vorhanden.

Aus der US-PS 30 49 215 und der US-PS 29 41 651 sind Vorrichtungen zum Überführen eines mehrreihigen Stromes von Gegenständen, beispielsweise Erz- und Gesteinsbrocken, bekannt, bei denen über einem als kegelige, rotierende Fläche ausgebildeten Zwischenförderer eine gestellfeste, spiralförmig nach außen verlaufende, Leitfläche angeordnet ist. Die spiralförmige Leitfläche befindet sich dabei - von den zu vereinzelnden Gegenständen aus gesehen - nicht auf der "Bergseite" der kegeligen, rotierenden Fläche des Zwischenförderers, sondern auf deren "Talseite". Demzufolge werden die zu vereinzelnden Gegenstände auch nicht von der Leitfläche abgedrängt. Die Bewegung der Gegenstände längs der spiralförmigen Leitfläche erfolgt vielmehr dadurch, daß die kegelige Fläche des Zwischenförderers derart stark geneigt ist, daß im Zusammenwirken mit der Fliehkraft eine ausreichend starke Bewegung nach außen dieser Gegenstände erfolgt.

Sämtliche vorbekannten Vorrichtungen sind relativ kompliziert aufgebaut. Weiterhin erlauben sie nur eine begrenzte Durchsatzgeschwindigkeit.

Aufgabe der Erfindung ist es daher, eine Vorrichtung der eingangs angegebenen Art zu schaffen, die einfacher aufgebaut ist als vorbekannte Vorrichtungen und die einen höheren Flaschendurchsatz ermöglicht.

Erfindungsgemäß wird diese Aufgabe dadurch gelöst, daß die rotierende Fläche des Zwischenförderers eine ebene Scheibe ist. Überraschenderweise hat sich gezeigt, daß es nicht erforderlich ist, die Fläche des Zwischenförderers kegelig auszubilden, sondern daß es genügt, eine ebene Scheibe zu verwenden. Die Herstellung wird hierdurch wesentlich vereinfacht. Weiterhin arbeitet die erfindungsgemäße Vorrichtung besonders effektiv, so daß sehr viele Flaschen pro Zeiteinheit vereinzelt werden können. Praktische Versuche haben gezeigt, daß ein Durchsatz von 80.000 Flaschen pro Stunde erreichbar ist.

Eine vorteilhafte Weiterbildung der Erfindung ist dadurch gekennzeichnet, daß zwischen dem Zuförderer und dem Zwischenförderer zwei parallele Leitflächen vorgesehen sind, von denen die eine in einem dem spiralförmigen Bogen entgegengesetzten Bogen in Richtung der Mitte der Scheibe verläuft und anschließend in die Spirale übergeht. Der mehrreihige Flaschenstrom wird hierdurch zunächst in die Nähe des Zentrums der rotierenden Fläche des Zwischenförderers gebracht. Bis dorthin bleibt dieser mehrreihige Flaschenstrom als solcher im wesentlichen erhalten. Ab dem Beginn des spiralförmig nach außen verlaufenden Bereichs der Leitfläche beginnt dann die Vereinzelung. Die Spirale kann sich dadurch über einen Winkelbereich von mehr als 180°, insbesondere von mehr als 270°, erstrecken. Dies bringt einerseits eine gute Ausnutzung eines vorgegebenen Scheibendurchmessers mit sich, andererseits eine gleichmäßige, schonende, kontinuierliche Vereinzelung.

Eine weitere vorteilhafte Weiterbildung der Erfindung ist dadurch gekennzeichnet, daß die Leitflächen im Endbereich des Zuförderers und im Anfangsbereich des Zwischenförderers in radialer Richtung auf den Mittelpunkt der Scheibe des Zwischenförderers zu verlaufen.

Ausführungsbeispiele der Erfindung werden nachstehend anhand der beigefügten Zeichnungen im einzelnen erläutert. In den Zeichnungen zeigt

Fig. 1 eine Ansicht von oben einer Ausführungsform der erfindungsgemäßen Vorrichtung,

Fig. 2 eine Ansicht von der Seite einer erfindungsgemäßen Vorrichtung und

Fig. 3 - Fig. 7 weitere Ansichten von oben.

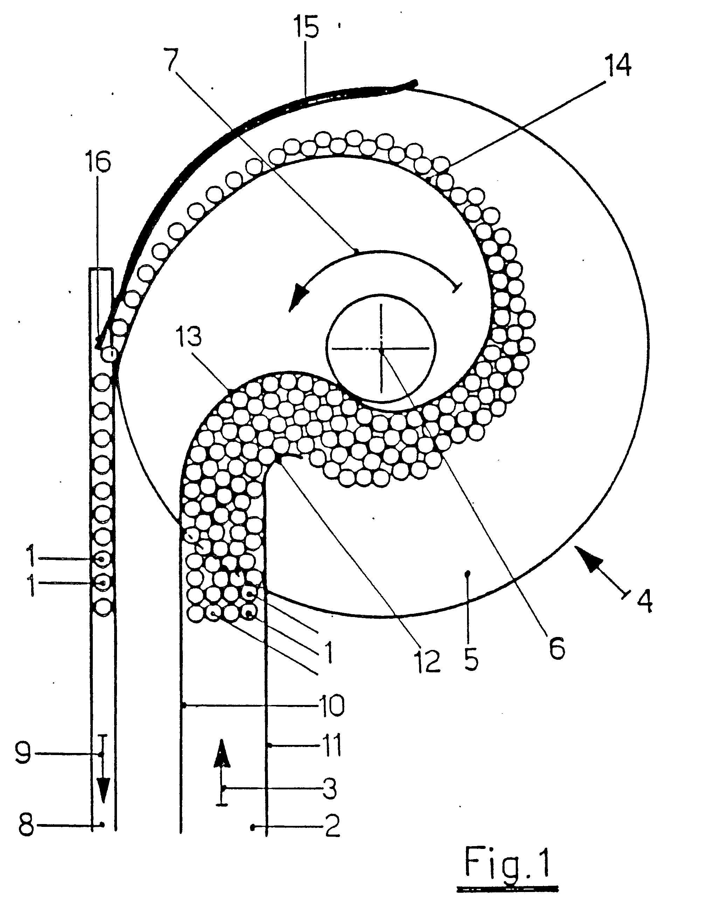

In der Darstellung der Fig. 1 werden die Flaschen 1 auf dem Zuförderer 2 in Richtung des Pfeiles 3 bewegt. Die Flaschen 1 bilden auf dem Zuförderer 2 etwa vier bis fünf Reihen.

Der Zwischenförderer ist insgesamt mit 4 bezeichnet. Er besteht aus einer ebenen, kreisförmigen Scheibe 5, die um ihren Mittelpunkt 6 in Richtung des Pfeiles 7 rotiert. An die Scheibe 5 des Zwischenförderers 4 schließt sich tangential der Abförderer 8 an, der sich geradlinig in Richtung des Pfeiles 9 bewegt.

Es sind folgende gestellfeste Leitflächen vorgesehen: Der geradlinige Zuförderer wird von zwei parallelen, beabstandeten Leitflächen 10, 11 begrenzt. Die in Förderrichtung 3 gesehen rechte Leitfläche 11 des Zuförderers 2 verläuft über den Rand der Scheibe 5 des Zwischenförderers 4 hinweg und endet mit einem über etwa 135° verlaufenden Bogenstück 12. Die in Förderrichtung 3 gesehen linke Leitfläche 10 verläuft in einem Bogen 13 in Richtung der Mitte 6 der Scheibe 5. Auch der Bogen 13 erstreckt sich über etwa 135°. Eine durch die Enden der Bögen 12 und 13 gezogene, gedachte Linie verläuft durch die Mitte 6 der Scheibe 5. An den Bogen 13 schließt sich eine in Drehrichtung 7 der Fläche 5 spiralförmig nach außen verlaufende, die Flaschen 1 abdrängende, gestellfeste Leitfläche 14 an. Diese Spirale 14 verläuft etwa über einen Winkelbereich von 315°. Die auf der Scheibe 5 stehenden, mit dieser rotierenden Flaschen 1 laufen auf die spiralförmig nach außen verlaufende Leitfläche 14 auf und werden von dieser mit einer radialen Komponente nach außen abgedrängt. Da die Tangentialgeschwindigkeit mit zunehmendem radialen Abstand vom Mittelpunkt 6 zunimmt, werden die Flaschen mehr und mehr vereinzelt, bis im Endbereich der Spirale 14 eine einzige Flaschenreihe vorhanden ist, bei der zudem die Flaschen noch beabstandet sind, also "drucklos" bewegt werden. Diese einreihige Flaschenreihe wird dann durch die Leitfläche 14 und die Leitfläche 15 auf dem Abförderer 8 übergeben. Die Leitfläche 15 verläuft über einen Winkelbereich von etwa 90° konzentrisch zum Mittelpunkt 6. Am Ende der Leitfläche 15 ist ein kurzer, nach außen weisender Abschnitt 16 vorgesehen, um eine Übergabe der Flaschenreihe an den Abförderer 8 zu ermöglichen. Es versteht sich, daß die Geschwindigkeit des Abförderers 9 wesentlich höher sein muß als diejenige des Zuförderers 2. Im Beispiel der Fig. 1 ist die Geschwindigkeit des Abförderers 8 etwa fünfmal so hoch wie diejenige des Zuförderers 2.

Der Bogen 13 verläuft entgegengesetzt zum spiralförmigen Bogen 14. Durch diese Ausgestaltung und dadurch, daß der Zuförderer 2 im Abstand einwärts von der Mitte 6 der Scheibe 5 verläuft, wird eine optimale Ausnutzung der Scheibe 5 sowie ein sehr großer Winkelbereich des Zuförderers 14 erreicht. Wenn die die Flaschen abdrängende Spirale 14 über einen großen Winkelbereich verlaufen kann, ist es möglich, diese Spirale 14 nicht so steil auszugestalten, sondern relativ flach. Hierdurch kann dann der Vereinzelungsvorgang weniger abrupt durchgeführt werden, was wiederum den Flaschendruchsatz erhöht.

Die in Fig. 1 gezeigte Anordnung bringt weiterhin die Besonderheit mit sich, daß Zuförderer 2 und Abförderer 8 entgegengesetzt parallel und mit geringem Abstand zueinander gerichtet sind.

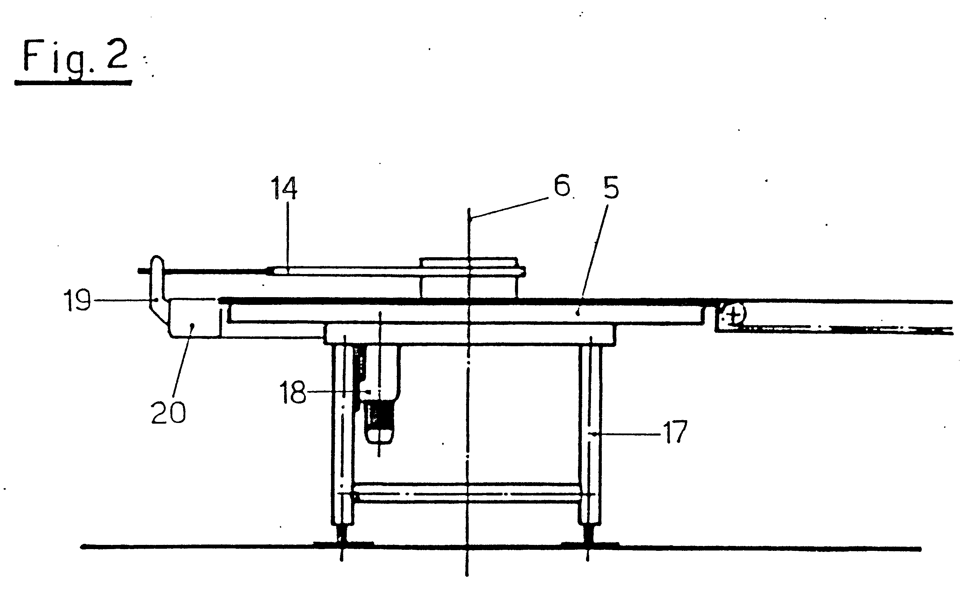

Fig. 2 zeigt eine erfindungsgemäße Vorrichtung in einer Ansicht von der Seite. Auf einem Gestell 17 ist die Scheibe 5 um die Achse 6 drehbar gelagert. Unter der Scheibe 5 befindet sich deren Antrieb 18. Am äußeren Rand der Scheibe 5 ist ein Auffangblech 19 vorgesehen, durch welches umfallende Flaschen daran gehindert werden, von der Scheibe 5 nach unten zu fallen. Die umgefallenen Flaschen werden dann in der Rinne 20 gesammelt und können von dort abgefördert werden.

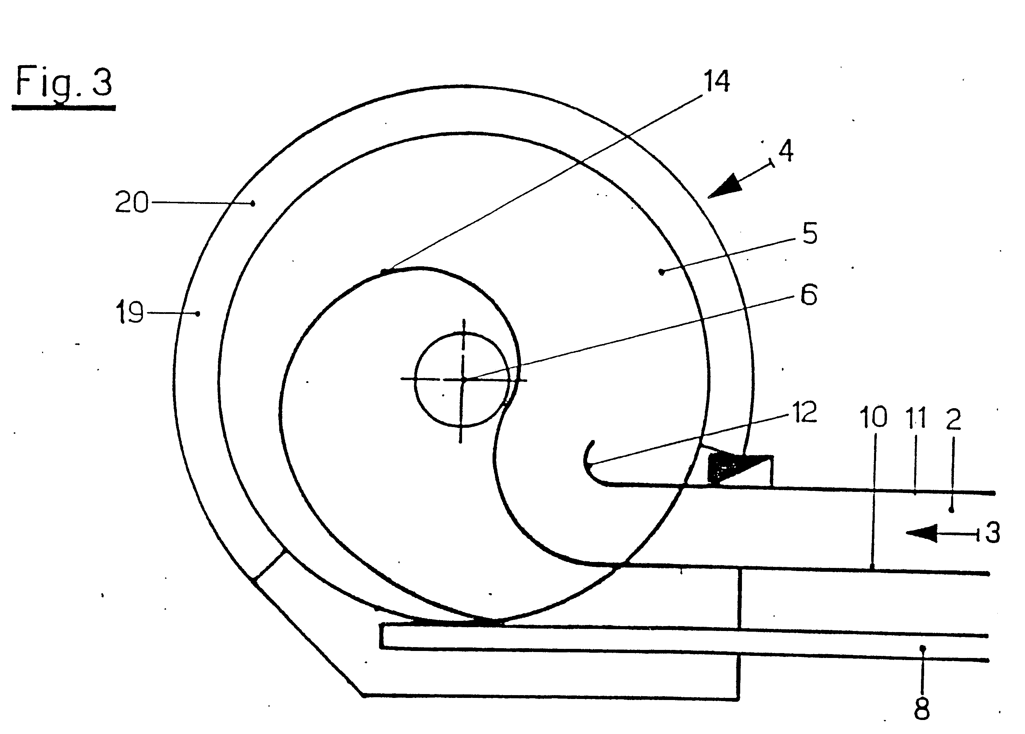

Die Fig. 3 zeigt die Vorrichtung der Fig. 2 in einer Ansicht von oben. Mit den Figuren 1 und 2 übereinstimmende Teile sind dabei mit gleichen Bezugszeichen versehen, so daß sie nicht erneut beschrieben werden müssen.

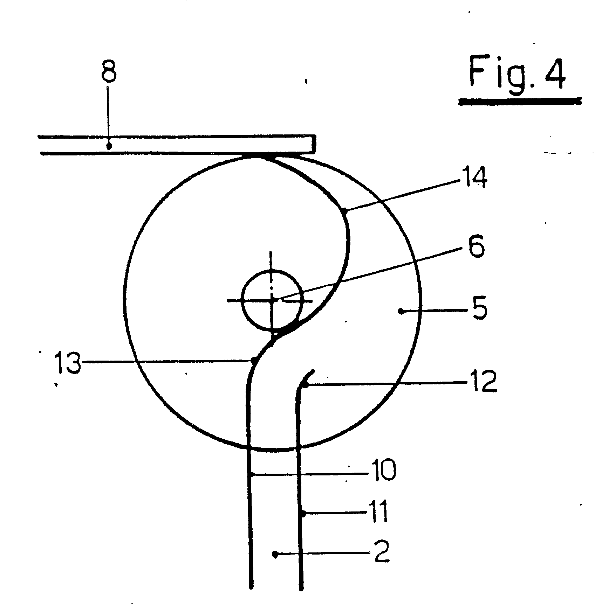

Fig. 4 zeigt eine weitere erfindungsgemäße Vorrichtung in einer Ansicht von oben. Gleiche Teile sind wieder mit gleichen Bezugs ziffern versehen. Der Zuförderer 2 verläuft geradlinig in radialer Richtung auf den Mittelpunkt 6 der Scheibe 5 zu. Dementsprechend erstrecken sich die Bögen 12 und 13 nur über einen Winkelbereich von etwa 45°. Die Spirale 14 erstreckt sich über einen Winkelbereich von etwa 135°. Demzufolge verlaufen der Zuförderer 2 und der Abförderer 8 nicht parallel, sondern rechtwinkelig zueinander.

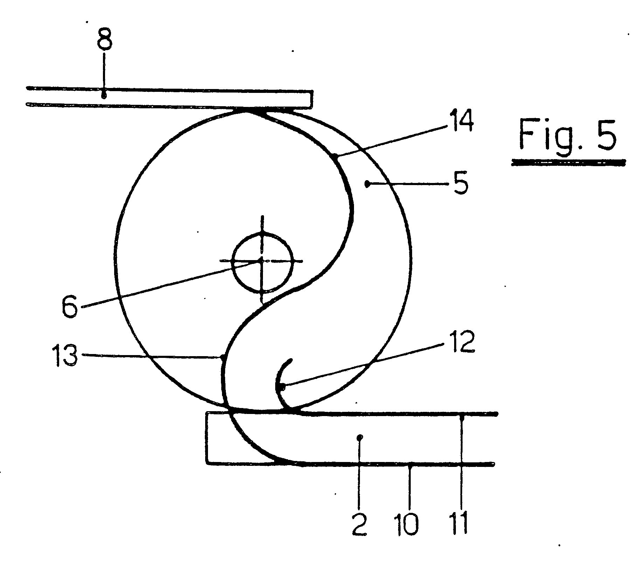

Fig. 5 zeigt eine weitere Möglichkeit der Realisierung der erfindungsgemäßen Vorrichtung. Die Winkelbereiche der Bögen 12, 13 und 14 und die Lagen von Zuförderer 2 und Abförderer 8 können unmittelbar aus der Zeichnung entnommen werden.

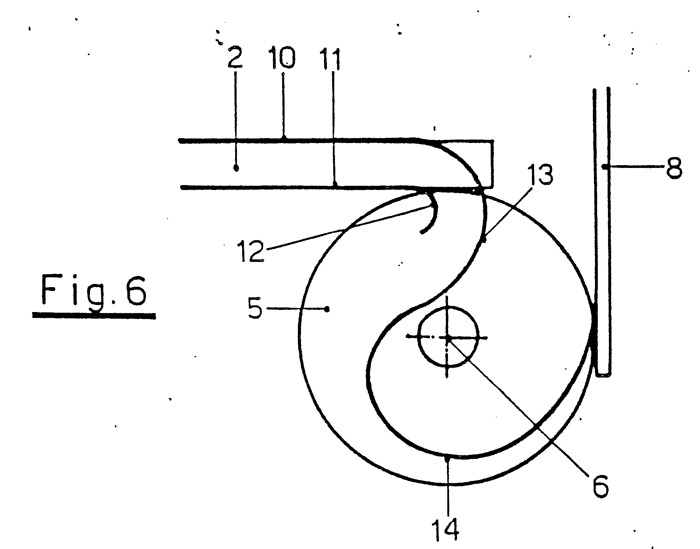

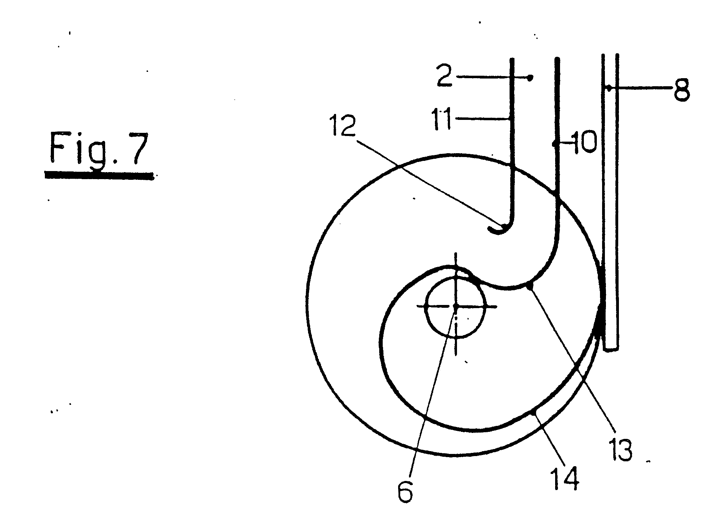

Gleiches gilt für die weiteren Alternativen der Figuren 6 und 7.

## Ansprüche

1. Vorrichtung zum Überführen eines mehrreihigen Stromes aufrechtstehender Gegenstände, insbesondere Flaschen, in eine einzige Reihe mit einem geradlinigen, mit Leitflächen versehenen Zuförderer,
einem aus einer rotierenden Fläche bestehenden Zwischenförderer,
einem Abförderer
und einer in Drehrichtung der Fläche spiralförmig nach außen verlaufenden, die Gegenstände abdrängenden, gestellfesten Leitfläche,
**dadurch gekennzeichnet,**
daß die rotierende Fläche (5) des Zwischenförderers (4) eine ebene Scheibe ist.

2. Vorrichtung nach Anspruch 1, dadurch gekennzeichnet, daß zwischen dem Zuförderer (2) und dem Zwischenförderer (4) zwei parallele Leitflächen (10, 11) vorgesehen sind, von denen die eine in einem dem spiralförmigen Bogen (14) entgegengesetzten Bogen (13) in Richtung der Mitte (6) der Scheibe (5) verläuft und anschließend in die Spirale (14) übergeht.

Fig.1

P 3 740 EU
SIMONAZZI A. & L. S.p.A.
Patentanmeldung

Fig. 2

P 3 740 EU
SIMONAZZI A. & L. S.p.A.
Patentanmeldung

# Fig. 3

EP 0 319 014 A1

SIMONAZZI A. & L. S.p.A.
Patentanmeldung
P 3 740 EU

Fig. 4

P 3 740 EU
SIMONAZZI A. & L. S.p.A.
Patentanmeldung

**Fig. 5**

P 3 740 EU
SIMONAZZI A. & L. S.p.A.
Patentanmeldung

Fig.6

2  10  11

8

13

12

5

6

14

P 3 740 EU
SIMONAZZI A. & L. S.p.A.
Patentanmeldung

# Fig. 7

P 3 740 EU
SIMONAZZI A. & L. S.p.A.
Patentanmeldung

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 050 892 (LERMUSIAUX) * Figuren 1,2; Seite 3, Zeile 31 - Seite 8, Zeile 20 * | 1 | B 65 G 47/68 B 65 G 47/14 |
| Y | --- | 2 | |
| Y | US-A-2 535 859 (MCPHERSON) * Figur 1; Spalte 3, Zeile 43 - Spalte 5, Zeile 54 * | 2 | |
| A | ----- | 1 | |

| | RECHERCHIERTE SACHGEBIETE (Int. Cl.4) |
|---|---|
| | B 65 G |

Der vorliegende Recherchenbericht wurde für alle Patentansprüche erstellt

| Recherchenort | Abschlußdatum der Recherche | Prüfer |
|---|---|---|
| DEN HAAG | 27-02-1989 | WERNER D.M. |

EPO FORM 1503 03.82 (P0403)